(19) Europäisches Patentamt / European Patent Office / Office européen des brevets

(11) **EP 4 137 880 A1**

(12) **EUROPEAN PATENT APPLICATION**
published in accordance with Art. 153(4) EPC

(43) Date of publication:
**22.02.2023 Bulletin 2023/08**

(21) Application number: **21821847.7**

(22) Date of filing: **12.04.2021**

(51) International Patent Classification (IPC):
$G02F\ 1/01$ (2006.01)   $G02B\ 26/06$ (2006.01)
$G02F\ 1/13$ (2006.01)   $G02F\ 1/133$ (2006.01)
$G02F\ 1/13357$ (2006.01)   $G02F\ 1/1347$ (2006.01)
$G03B\ 21/00$ (2006.01)

(52) Cooperative Patent Classification (CPC):
**G02B 26/06; G02F 1/01; G02F 1/13; G02F 1/133; G02F 1/1336; G02F 1/1347; G03B 21/00**

(86) International application number:
**PCT/JP2021/015196**

(87) International publication number:
**WO 2021/250993 (16.12.2021 Gazette 2021/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.06.2020 JP 2020098997**

(71) Applicant: **Sony Group Corporation**
**Minato-Ku, Tokyo, 108-0075 (JP)**

(72) Inventor: **TAHARA, Hiroyuki**
**Tokyo 108-0075 (JP)**

(74) Representative: **D Young & Co LLP**
**120 Holborn**
**London EC1N 2DY (GB)**

(54) **SIGNAL PROCESSING DEVICE, SIGNAL PROCESSING METHOD, PROGRAM, AND LIGHTING DEVICE**

(57) Provided by the present technology is a signal processing apparatus that performs a calculation process of calculating a phase distribution for reproducing a target light intensity distribution on a projection plane by performing spatial light phase modulation on incident light. The calculation process is performed in such a manner as to satisfy "Condition 1." "Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

FIG. 1

**Description**

[Technical Field]

The present technology relates to a technical field concerning a signal processing apparatus and method for executing a process of calculating a phase distribution for reproducing a target light intensity distribution on a projection plane by performing spatial light phase modulation on incident light, a program, and an illumination apparatus for reproducing a target light intensity distribution on a projection plane by performing spatial light phase modulation on incident light.

[Background Art]

There is a known technology for reproducing a desired image (light intensity distribution) by performing spatial light modulation on incident light through the use of a liquid crystal panel and a spatial light modulator (SLM) such as a DMD (Digital Micromirror Device). For example, widely known is a technology for reproducing a desired image by performing spatial light intensity modulation on incident light.
Meanwhile, also known is a technology for projecting a desired produced image by performing spatial light phase modulation on incident light (refer, for example, to PTL 1 below). In a case where spatial light intensity modulation is performed, incident light is partially dimmed or blocked in an SLM for reproducing a desired light intensity distribution. However, in a case where spatial light phase modulation is performed, light utilization efficiency can be improved because a desired light intensity distribution can be reproduced without dimming or blocking the incident light in the SLM.

[Citation List]

[Patent Literature]

[PTL 1]
National Publication of International Patent Application No. 2017-520022

[Summary]

[Technical Problem]

For use in the case where spatial light phase modulation is performed, a Freeform method represented by a method disclosed in PTL 1 is known as the method of determining a phase distribution for reproducing a target image (target light intensity distribution).
However, when the phase distribution for reproducing the target light intensity distribution is to be calculated, a Freeform method in the past disclosed in PTL 1 rewrites a problem into an easy-to-solve form, for example, by approximating the formula of a ray-optics model (a light propagation model based on ray optics), which originally includes a nonlinear term. This results in a tendency toward lower reproducibility of a reproduced image relative to the target light intensity distribution.
The present technology has been made in view of the above circumstances. An object of the present technology is to improve the reproducibility of a reproduced image relative to a target light intensity distribution.

[Solution to Problem]

A signal processing apparatus according to the present technology performs a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.
Using a model such as the above-mentioned ray-optics model including a nonlinear term makes it possible to accurately determine the phase distribution for reproducing the target light intensity distribution.

The above-described signal processing apparatus according to the present technology may alternatively be configured to perform the calculation process of calculating the phase distribution in such a manner as to satisfy "Condition 1" above and "Condition 2." "Condition 2" specifies that a term of the light intensity distribution of the incident light be incorporated in the nonlinear ray-optics model.

This alternative configuration ensures that performing a phase distribution calculation by using the feedback loop specified by "Condition 1" makes it possible to determine the phase distribution in such a manner as to cancel the incident light intensity distribution and reproduce the target light intensity distribution.

The above-described signal processing apparatus according to the present technology may alternatively be configured to perform the calculation process of calculating the phase distribution in such a manner as to satisfy "Condition 1" above and "Condition 3." "Condition 3" specifies that a term of the light intensity distribution of the incident light be incorporated in both the nonlinear ray-optics model and the inverse calculation model.

Since the term of the incident light intensity distribution is incorporated not only in the ray-optics model but also in the inverse calculation model, stable convergence can be achieved in the phase distribution calculation performed by using the feedback loop specified in "Condition 1."

The above-described signal processing apparatus according to the present technology may alternatively be configured to control the feedback gain according to the absolute value of the error distribution.

When the feedback loop specified in "Condition 1" is used, the light intensity correction value to be inputted in the inverse calculation model needs to be sufficiently small in order to assure the reliability of the phase correction value calculated by the inverse calculation model. Controlling the feedback gain according to the absolute value of the error distribution as described above makes it possible to prevent an excessive light intensity correction value from being inputted in the inverse calculation model.

The above-described signal processing apparatus according to the present technology may alternatively be configured such that, in a case where a predetermined value is exceeded by a maximum value of the absolute value of the light intensity correction value obtained by multiplying the error distribution by the feedback gain based on a constant, the feedback gain is controlled to decrease the maximum value of the absolute value of the light intensity correction value to a value not greater than the predetermined value, and that, in a case where the predetermined value is not exceeded by the maximum value of the absolute value of the light intensity correction value obtained by multiplying the error distribution by the feedback gain based on the constant, the constant is used as the feedback gain.

This alternative configuration makes it possible to repeatedly correct the provisional value of the phase distribution by using a tiny light intensity correction value obtained by multiplying the error distribution by a feedback gain adjusted step by step, and then provide increased convergence by changing the feedback gain to the constant when the error distribution is made equal to or smaller than the predetermined value by the repeated correction.

A signal processing method according to the present technology is adopted by a signal processing apparatus that performs a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

The above-described signal processing method also provides operations similar to those performed by the above-described signal processing apparatus according to the present technology.

Further, a program according to the present technology is a program readable by computer equipment and adapted to cause the computer equipment to perform a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

The above-described program implements the earlier-described signal processing apparatus according to the present technology.

Moreover, an illumination apparatus according to the present technology includes a light source section, a phase modulation section, and a signal processing section. The light source section has a light emitting element. The phase modulation section performs spatial light phase modulation on incident light from the light source section. The signal processing section performs a calculation process of calculating a phase distribution for reproducing a target light intensity distribution on a projection plane by performing the spatial light phase modulation in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

The above-described illumination apparatus also provides operations similar to those performed by the earlier-described signal processing apparatus according to the present technology.

The above-described illumination apparatus according to the present technology may alternatively be configured such that the light source section has a plurality of light emitting elements.

This alternative configuration eliminates the necessity of using a single high-output light emitting element in the light source section in order to satisfy predetermined light intensity requirements.

The above-described illumination apparatus according to the present technology may alternatively be configured such that the signal processing section performs a calculation process of calculating the phase distribution in such a manner as to satisfy "Condition 1" above and "Condition 2," which specifies that the term of the light intensity distribution of the incident light be incorporated in the nonlinear ray-optics model, includes an intensity distribution detection section for detecting the light intensity distribution of the incident light, and uses the light intensity distribution detected by the intensity distribution detection section as the light intensity distribution to be incorporated in the nonlinear ray-optics model.

This alternative configuration ensures that, in a case where the incident light intensity distribution temporally changes, the incident light intensity distribution resulting after a temporal change can be reflected in the nonlinear ray-optics model.

[Brief Description of Drawings]

[FIG. 1]

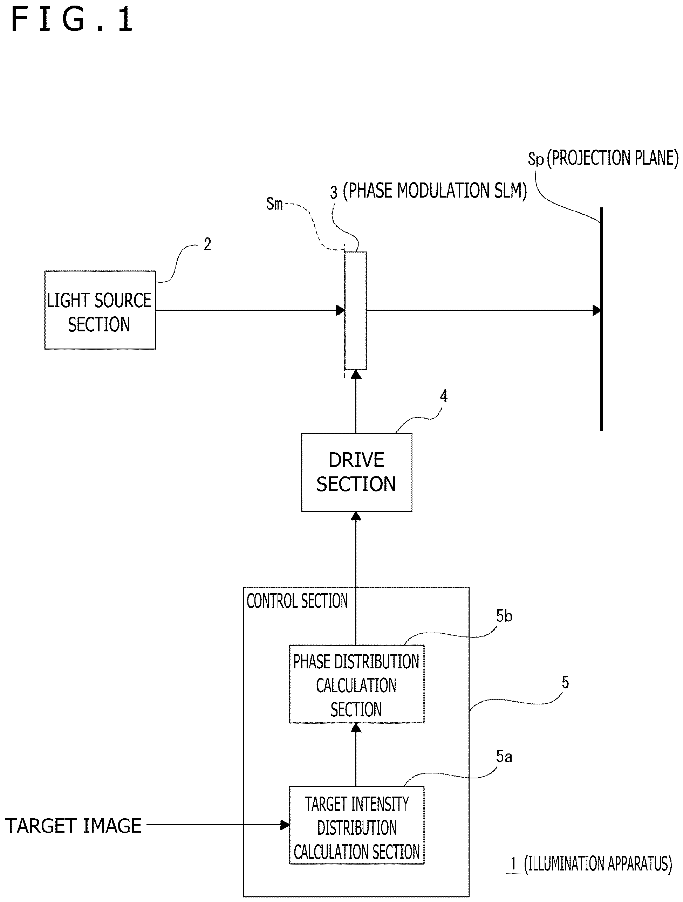

FIG. 1 is a diagram illustrating a configuration example of an illumination apparatus according to a first embodiment of the present technology.
[FIG. 2]

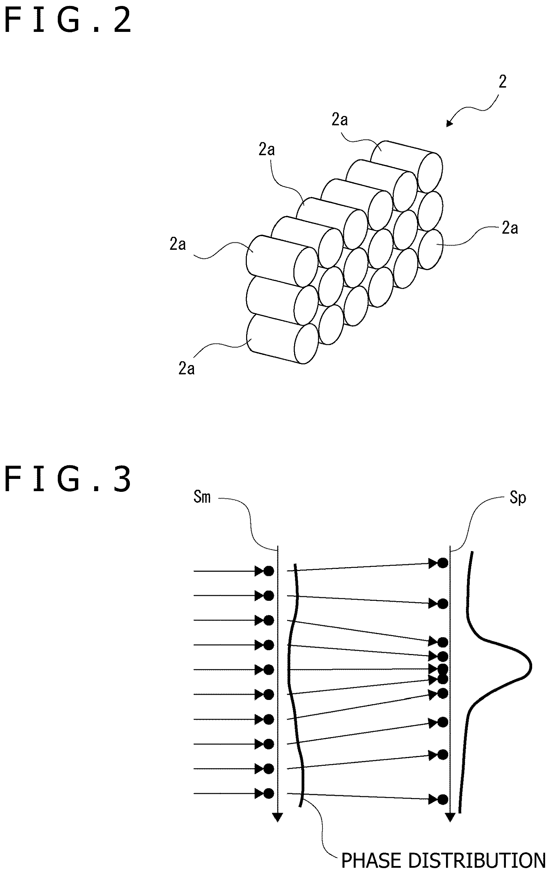

FIG. 2 is an explanatory diagram illustrating a configuration example of a light source section included in the illumination apparatus according to the embodiment of the present technology.
[FIG. 3]
FIG. 3 is an explanatory diagram illustrating the principles of image reproduction by spatial light phase modulation.
[FIG. 4]

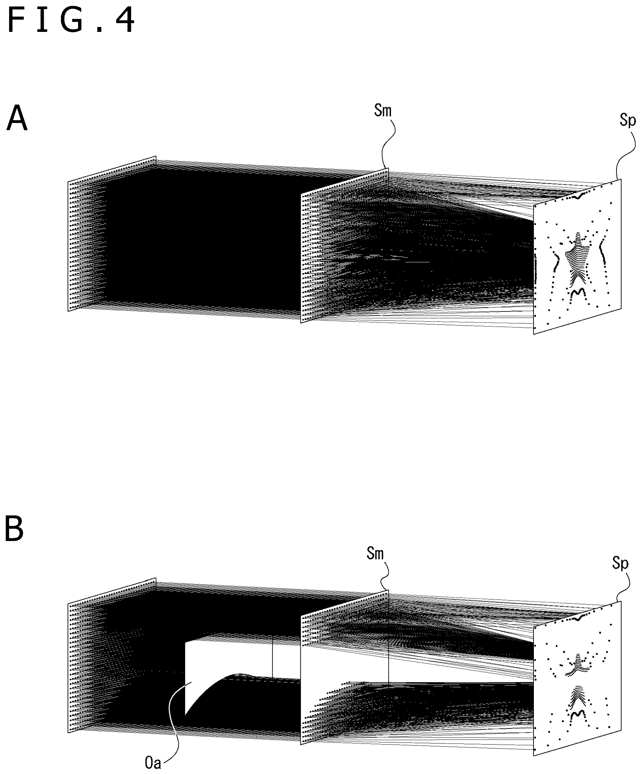

FIG. 4 is an explanatory diagram illustrating problems with a Freeform method in the past.
[FIG. 5]

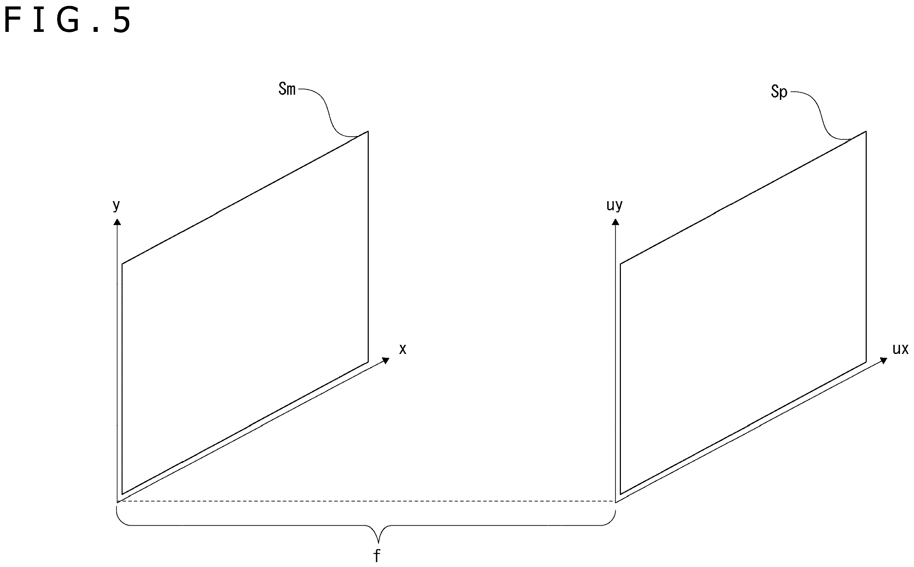

FIG. 5 is a diagram illustrating a relation between a projection distance and a coordinate system of phase modulation plane and projection plane.
[FIG. 6]

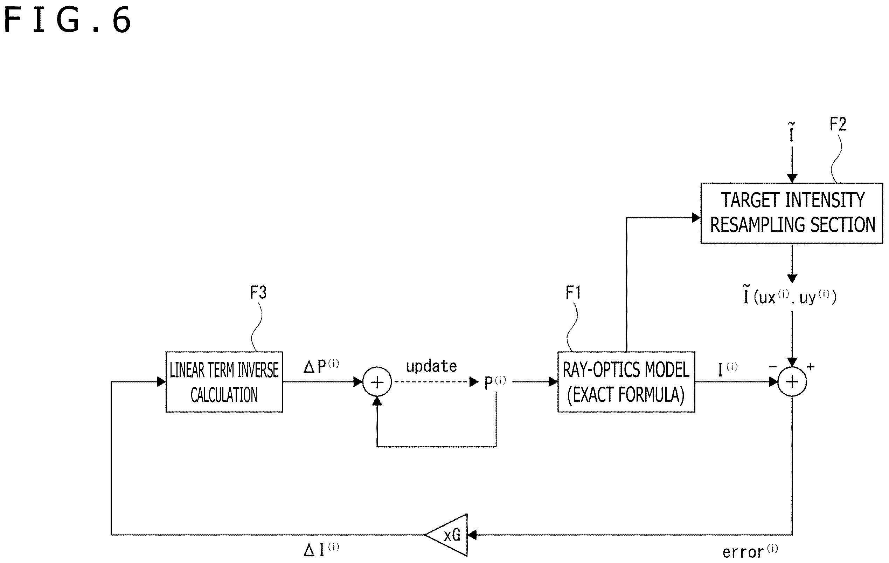

FIG. 6 is a diagram illustrating an optimization loop provided by a new algorithm that serves as a base in the embodiment.
[FIG. 7]

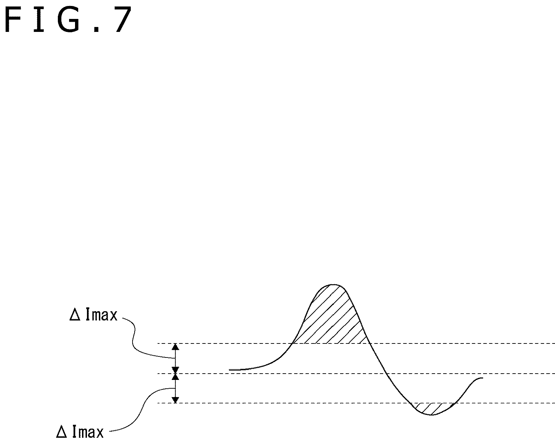

FIG. 7 is a schematic diagram illustrating an image of dynamic adjustment of a feedback gain in the embodiment.
[FIG. 8]

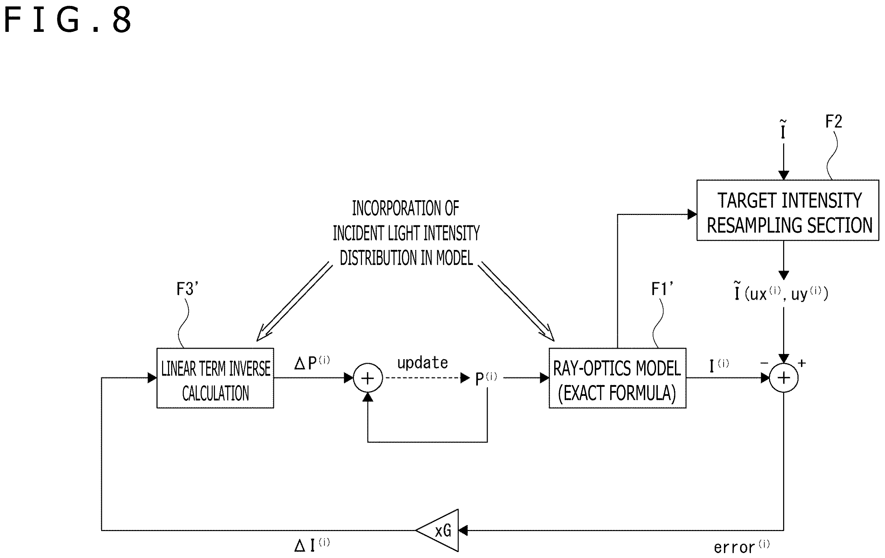

FIG. 8 is a diagram illustrating an optimization loop provided by a phase distribution calculation algorithm according to the embodiment.
[FIG. 9]

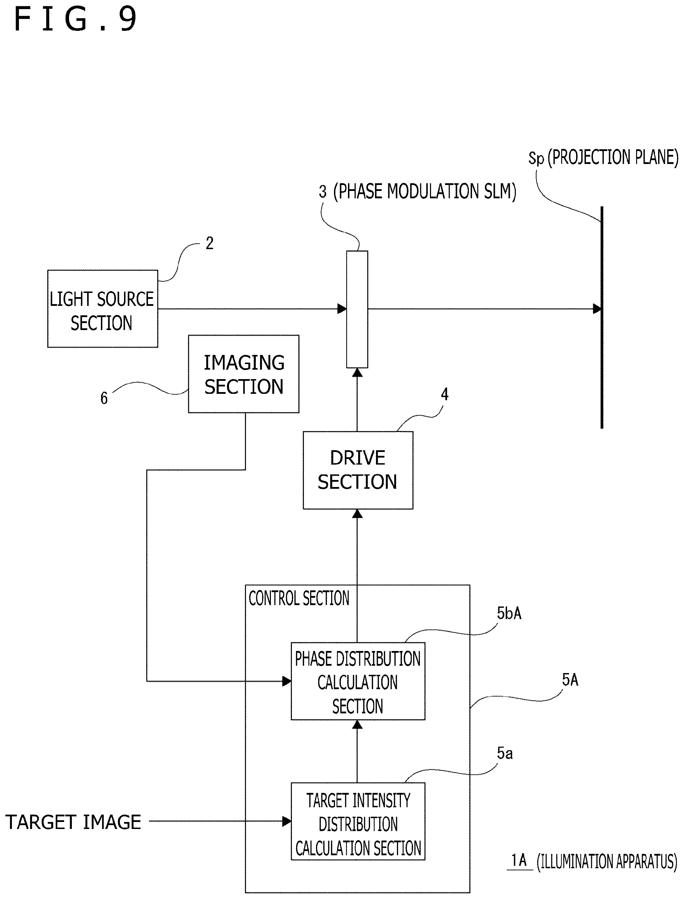

FIG. 9 is a diagram illustrating a configuration example of the illumination apparatus according to a second embodiment of the present technology.
[FIG. 10]

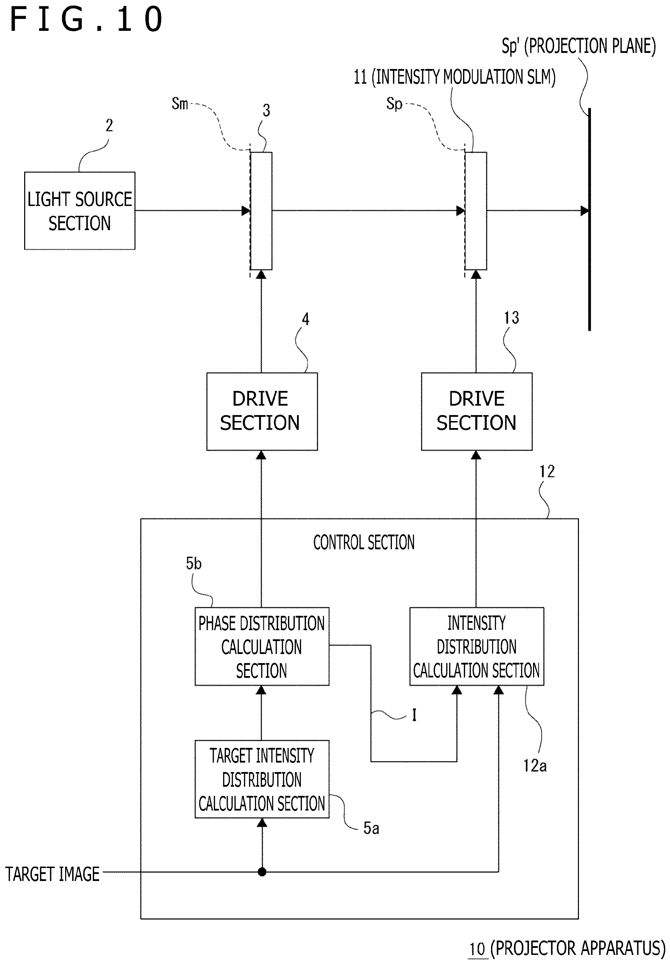

FIG. 10 is a diagram illustrating a configuration example of a projector apparatus to which the illumination apparatus according to the first embodiment is applied.
[FIG. 11]

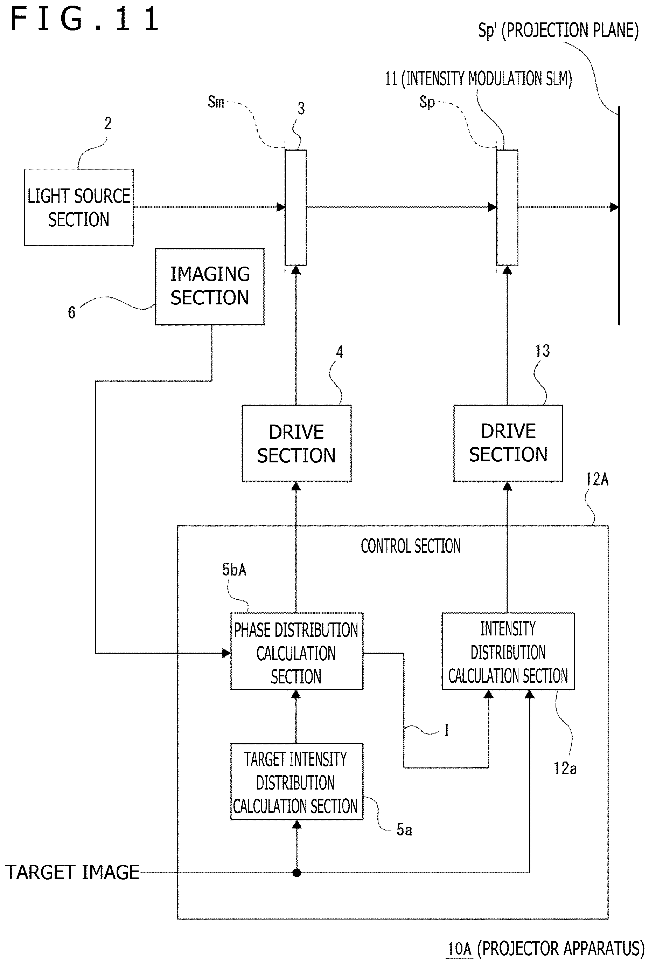

FIG. 11 is a diagram illustrating a configuration example of the projector apparatus to which the illumination apparatus according to the second embodiment is applied.

[Description of Embodiments]

Embodiments of the present technology will now be described in the following order with reference to the accompanying drawings.

<1. First Embodiment>

[1-1. Configuration of Illumination Apparatus]
[1-2. Phase Distribution Calculation Method according to Embodiment]

<2. Second Embodiment>
<3. Third Embodiment (Application to Projector Apparatus)>
<4. Modifications>
<5. Summary of Embodiments>
<6. Present Technology>

<1. First Embodiment>

[1-1. Configuration of Illumination Apparatus]

FIG. 1 is a diagram illustrating a configuration example of an illumination apparatus 1 according to a first embodiment of the present technology.
As illustrated in FIG. 1, the illumination apparatus 1 includes a light source section 2, a phase modulation SLM (Spatial Light Modulator) 3, a drive section 4, and a control section 5.
The illumination apparatus 1 is configured to reproduce a desired image (light intensity distribution) on a projection plane Sp by allowing the phase modulation SLM 3 to perform spatial light phase modulation on incident light from the light source section 2. The illumination apparatus 1 described above may be applied, for example, to a headlamp (headlight) of a vehicle. In a case where the illumination apparatus 1 is applied to the headlamp, the illumination apparatus 1 may be configured such that the phase modulation SLM 3 performs spatial light phase modulation to change the irradiation range of a high or low beam.
The light source section 2 functions as a light source for causing light to be incident on the phase modulation SLM 3. In the present example, the light source section 2 includes a plurality of light emitting elements 2a as illustrated, for example, in FIG. 2. More specifically, the light source section 2 includes a light source having a two-dimensional array of the plurality of light emitting elements 2a, and the light emitted from the plurality of light emitting elements 2a is incident on the phase modulation SLM 3.
In the present example, laser light emitting elements are used as the light emitting elements 2a. It should be noted that the light emitting elements 2a are not limited to the laser light emitting elements. For example, LEDs (Light Emitting Diodes), discharge lamps, or other light emitting elements may alternatively be used as the light emitting elements 2a.
The phase modulation SLM 3 includes, for example, a transmissive liquid crystal panel, and performs spatial light phase modulation on the incident light.
It should be noted that the phase modulation SLM 3 may alternatively be configured as a reflective spatial light phase modulator instead of a transmissive spatial light phase modulator. For example, a reflective liquid crystal panel or a DMD (Digital Micromirror Device) may be used as the reflective spatial light phase modulator.
The drive section 4 includes a drive circuit for driving the phase modulation SLM 3. The drive section 4 is configured to be able to drive pixels in the phase modulation SLM 3 on an individual basis.
The control section 5 is configured, for instance, as a microcomputer including, for example, a CPU (Central Processing Unit), a ROM (Read Only Memory), and a RAM (Random Access Memory). The control section 5 receives an input of a target image and calculates the phase distribution of the phase modulation SLM 3 for reproducing the target image on the projection plane Sp. The control section 5 controls the drive section 4 in such a manner as to drive the phase modulation SLM 3 according to the calculated phase distribution.
As depicted in FIG. 1, the control section 5 includes, as functional sections for calculating the phase distribution of the phase modulation SLM 3 from the target image, a target intensity distribution calculation section 5a and a phase distribution calculation section 5b. Based on the target image, the target intensity distribution calculation section 5a calculates the light intensity distribution to be reproduced on the projection plane Sp (this targeted light intensity distribution may be hereinafter referred to as the "target intensity distribution"). The phase distribution calculation section 5b calculates, by a Freeform method, the phase distribution of the phase modulation SLM 3 for reproducing the target intensity distribution calculated by the target intensity distribution calculation section 5a on the projection plane Sp. Here, the Freeform method is a generic name for the method of calculating, based on ray optics, the phase distribution for reproducing a targeted light intensity distribution on the projection plane Sp by performing spatial light phase modulation.

In the present example, processing performed by the target intensity distribution calculation section 5a and the phase distribution calculation section 5b is implemented by allowing the CPU to perform software processing according to a program stored in a storage such as the ROM.

It should be noted that the processing performed by the phase distribution calculation section 5b will be described in detail later.

[1-2. Phase Distribution Calculation Method according to Embodiment]

Firstly, the principles of image reproduction by spatial light phase modulation according to the embodiment of the present technology are described below with reference to FIG. 3.

FIG. 3 schematically illustrates a relation between light rays incident on a phase modulation plane Sm of the phase modulation SLM 3, a wavefront of the phase distribution in the phase modulation SLM 3, phase-modulated light rays, and a light intensity distribution formed on the projection plane Sp by the phase-modulated light rays.

Initially, as a premise, a smooth curve is drawn to indicate the wavefront of the phase distribution in the phase modulation SLM 3 because the Freeform method is adopted. Since the phase modulation SLM 3 performs spatial light phase modulation, incident light rays are refracted to travel in the normal direction of the wavefront of the phase distribution. Due to this refraction, a portion having a high ray density and portions having a low ray density are formed on the projection plane Sp. This results in the formation of a light intensity distribution on the projection plane Sp.

Because of the above-described principles, a desired image can be reproduced on the projection plane Sp by a phase distribution pattern set in the phase modulation SLM 3.

Here, a Freeform method in the past described in Patent Document 1, which is mentioned earlier, assumes that the light intensity distribution of light incident on the phase modulation plane Sm is even, as depicted in A of FIG. 4, that is, a uniform distribution in which there is no light intensity variation in the in-plane direction.

Therefore, in a case where the incident light intensity distribution is uneven because, for instance, the light incident on the phase modulation plane Sm is partially blocked by a shield Oa as depicted in B of FIG. 4, the incident light intensity distribution may become superimposed on a reproduced image and cause the failure to achieve proper image reproduction.

Accordingly, the present embodiment is configured by reviewing a phase distribution calculation method based on the Freeform method in the past in order to prevent the incident light intensity distribution from becoming superimposed on the reproduced image.

First of all, the phase distribution calculation method on which the present embodiment is based will be described with reference to Equations 1 to 35 and FIGS. 5 to 7.

The following description is given with reference to Reference 1 below.

Reference 1: High Brightness HDR Projection Using Dynamic Freeform Lensing GERWIN DAMBERG and JAMES GREGSO (DOI: http://dx.doi.org/10.1145/2857051)

Further, prerequisites for the following description are as follows.

· The imaginary unit is expressed as j.
· A set of (M,N) matrices whose components are scalars belonging to a complex set C is expressed as $C^{M \times N}$.
· The index of matrix elements begins with 0.
· A matrix A having $A_{m,n}$ as the m-th row, n-th column matrix element is expressed as $A = \{A_{m,n}\}_{m,n}$.
· A convolution operation of a matrix $A \in C^{M \times N}$ by a kernel $K \in C^{M \times N}$ is defined as indicated in Equation 1 below.

[Math. 1]

$$K \otimes A = \left\{ \sum_{k=0}^{M-1} \sum_{l=0}^{N-1} K_{k,l} A_{\mathrm{mod}(m-k,M),\,\mathrm{mod}(n-l,N)} \right\}_{m,n} \quad \cdots [\text{Equation 1}]$$

where mod $(\cdot,M)$ represents a remainder by M.

Initially, as a basic matter, an intensity distribution reproduced from a certain phase distribution can be calculated by using a light propagation model. However, in a case where an intensity distribution is to be reproduced, it is necessary to solve an inverse problem where it is necessary to clarify the phase distribution that implements such an intensity distribution. In general, it is extremely difficult to solve this inverse problem in a rigorous sense. Therefore, the phase distribution is approximately estimated. The method of estimating the phase distribution is roughly classified into two types, namely, a computer-generated hologram (CGH) method based on wave optics and the Freeform method based on ray optics. The CGH method performs phase estimation in consideration of a light interference phenomenon, and thus exhibits excellent drawing capabilities when coherent light is used as an incident light source. However, the CGH method makes it necessary to discretize a calculation region at frequent sampling intervals, and thus involves a high calculation cost. Meanwhile, the Freeform method is affected by interference not taken into consideration when calculation is performed under a coherent light source, and thus makes it difficult to delicately draw high-frequency components as compared with the CGH method. However, an algorithm capable of performing high-speed calculations is proposed based on the Freeform method. The Freeform method in the past does not perform an optimization calculation capable of converging to an exact solution of the phase distribution, that is, "any phase distribution having a ray density distribution closest to the target intensity distribution." Instead, the Freeform method in the past converts a problem into an easy-to-solve form, for example, by approximating the formula of a light propagation model (ray-optics model) based on ray optics.

The thesis designated as Reference 1 proposes an algorithm that uses a proximity method for estimating the phase distribution based on the Freeform method (this algorithm is hereinafter referred to as the "proximity algorithm"). A method of mathematical backing and implementation of the proximity algorithm is described below with ambiguity eliminated wherever possible.

First of all, a projection distance f and a coordinate system of phase modulation plane Sm and projection plane Sp are defined as depicted in FIG. 5. Here, it is assumed that the projection distance f is the distance between the phase modulation plane Sm and the projection plane Sp.

A relation between a phase distribution $P(x,y)$ in the phase modulation plane Sm and a light intensity distribution I in the projection plane Sp of a propagation destination is formulated based on ray optics. In the following description, light incident on the phase modulation plane Sm is assumed to be a plane wave in order to consider a group of light rays that are vertically incident on equally-spaced grid points $x = (x,y)^T$ on the phase modulation plane Sm. Further, the average intensity of all light intensity distributions (incident light, image reproduced by phase modulation, and target image (targeted image)) is standardized to 1 (i.e., the intensity value of each point coincides with a push-up magnification with respect to the average intensity). Grid points $u = (ux,uy)^T$ where the group of light rays penetrate the projection plane Sp can be expressed as indicated in Equation 2 below by using the phase distribution $P(x,y)$ in the phase modulation plane Sm.

[Math. 2]

$$u = x + f \cdot \nabla P(x,y) \quad \cdots [\text{Equation 2}]$$

Let us consider a square-shaped microscopic region that is enclosed by grid points uniformly distributed on the phase modulation plane Sm and by grid points adjacent to the above-mentioned grid points. A microscopic region on the projection plane Sp that corresponds to the microscopic region on the phase modulation plane Sm is shaped like a parallelogram. The area expansion rate $m(ux,uy)$ in this instance is calculated as follows.

[Math. 3]

$$m(ux, uy) = \frac{\partial u}{\partial x} \times \frac{\partial u}{\partial y}$$

$$= 1 + f\nabla^2 P(x,y) + f^2\frac{\partial^2}{\partial x^2}P(x,y) \cdot \frac{\partial^2}{\partial y^2}P(x,y) - f^2\left(\frac{\partial^2}{\partial x \partial y}P(x,y)\right)^2$$

$\cdots$ [Equation 3]

When an electric field strength I(ux,uy) at grid points (ux,uy) on the projection plane Sp is calculated as the ray density distribution 1/m(ux,uy), Equation 4 below is obtained.
[Math. 4]

$$I(ux, uy) = \frac{1}{1 + f\nabla^2 P(x,y) + f^2\frac{\partial^2}{\partial x^2}P(x,y) \cdot \frac{\partial^2}{\partial y^2}P(x,y) - f^2\left(\frac{\partial^2}{\partial x \partial y}P(x,y)\right)^2}$$

$\cdots$ [Equation 4]

Here, I(ux,uy) represents the electric field strength at the grid points (ux,uy) on the projection plane Sp that correspond to the grid points (x,y) on the phase modulation plane Sm. Therefore, it should be noted that, even when the coordinates of the phase modulation plane Sm are sampled at the equally-spaced grid points (x,y) for the purpose of numerical value calculation, I(ux,uy) just indicates the values of electric field strength sampled at the grid points (ux,uy), which are unequally spaced on the projection plane Sp.

In the proximity algorithm, the intensity distribution indicated in Equation 4 is linearly approximated around P = 0 as indicated in Equation 5 below.
[Math. 5]

$$I(ux, uy) \approx 1 - f\nabla^2 P(x,y) \qquad \cdots \text{[Equation 5]}$$

Consequently, the phase distribution P^ ("P^" denotes a symbol obtained by putting a "^" mark on "P") to be determined with respect to a target intensity I^~ ("I^~" denotes a symbol obtained by putting a "~" mark on "I") is obtained as expressed in Equation 6 below.
[Math. 6]

$$\hat{P}(x, y) = \arg\min_{p} \iint \left\{\tilde{I}(ux, uy) - 1 + f\nabla^2 P(x,y)\right\}^2 dxdy \qquad \cdots \text{[Equation 6]}$$

Next, the problem is discretized. The coordinates of the phase modulation plane Sm are sampled by using grid points that are equally spaced at a pitch d and with a size M×N.
[Math. 7]

$$x = \{x_{m,n}\}_{m,n} = \{nd\}_{m,n}$$

$$= \begin{pmatrix} 0 & d & 2d & \dots & (N-1)d \\ 0 & d & 2d & \dots & (N-1)d \\ 0 & d & 2d & \dots & (N-1)d \\ \vdots & \vdots & \vdots & \ddots & \vdots \\ 0 & d & 2d & \dots & (N-1)d \end{pmatrix}$$

$$\cdots [\text{Equation } 7]$$

[Math. 8]

$$y = \{y_{m,n}\}_{m,n} = \{-md\}_{m,n}$$

$$= \begin{pmatrix} 0 & 0 & 0 & \dots & 0 \\ -d & -d & -d & \dots & -d \\ -2d & -2d & -2d & \dots & -2d \\ \vdots & \vdots & \vdots & \ddots & \vdots \\ -(M-1)d & -(M-1)d & -(M-1)d & \dots & -(M-1)d \end{pmatrix}$$

$$\cdots [\text{Equation } 8]$$

The phase distribution is also sampled at the above-mentioned equally-spaced grid points and represented in a matrix form as indicated in the equation $P = \{P_{m,n}\}_{m,n} = \{P(x_{m,n}, y_{m,n})\}_{m,n}$. Various differentiations with respect to this phase distribution P are defined as follows.

[Math. 9]

$$\frac{\partial}{\partial x}P = \frac{1}{d}\begin{pmatrix} -1 & 0 & \dots & 0 & 1 \\ 0 & 0 & \dots & 0 & 0 \\ \vdots & \vdots & \ddots & \vdots & \vdots \\ 0 & 0 & \dots & 0 & 0 \\ 0 & 0 & \dots & 0 & 0 \end{pmatrix} \otimes P = \frac{1}{d}\begin{pmatrix} P_{0,1} - P_{0,0} & P_{0,2} - P_{0,1} & \dots & P_{0,0} - P_{0,N-1} \\ P_{1,1} - P_{1,0} & P_{1,2} - P_{1,1} & \dots & P_{1,0} - P_{1,N-1} \\ \vdots & \vdots & \ddots & \vdots \\ P_{M-1,1} - P_{M-1,0} & P_{M-1,2} - P_{M-1,1} & \dots & P_{M-1,0} - P_{M-1,N-1} \end{pmatrix}$$

$$\cdots [\text{Equation } 9]$$

[Math. 10]

$$\frac{\partial}{\partial y}P = \frac{1}{d}\begin{pmatrix} 1 & 0 & \dots & 0 & 0 \\ 0 & 0 & \dots & 0 & 0 \\ \vdots & \vdots & \ddots & \vdots & \vdots \\ 0 & 0 & \dots & 0 & 0 \\ -1 & 0 & \dots & 0 & 0 \end{pmatrix} \otimes P = \frac{1}{d}\begin{pmatrix} P_{0,0} - P_{1,0} & P_{0,1} - P_{1,1} & \dots & P_{0,N-1} - P_{1,N-1} \\ P_{1,0} - P_{2,0} & P_{1,1} - P_{2,1} & \dots & P_{1,N-1} - P_{2,N-1} \\ \vdots & \vdots & \ddots & \vdots \\ P_{M-1,0} - P_{0,0} & P_{M-1,1} - P_{0,1} & \dots & P_{M-1,N-1} - P_{0,N-1} \end{pmatrix}$$

$$\cdots [\text{Equation } 10]$$

[Math. 11]

$$\nabla^2 P = \frac{1}{d^2} \begin{pmatrix} -4 & 1 & 0 & \cdots & 0 & 1 \\ 1 & 0 & 0 & \cdots & 0 & 0 \\ 0 & 0 & 0 & \cdots & 0 & 0 \\ \vdots & \vdots & \vdots & \ddots & \vdots & \vdots \\ 0 & 0 & 0 & \cdots & 0 & 0 \\ 1 & 0 & 0 & \cdots & 0 & 0 \end{pmatrix} \otimes P$$

$$= \frac{1}{d^2} \begin{pmatrix} -4P_{0,0} + P_{0,1} + P_{0,N-1} + P_{1,0} + P_{M-1,0} & \cdots & -4P_{0,N-1} + P_{0,0} + P_{0,N-2} + P_{1,N-1} + P_{M-1,N-1} \\ -4P_{1,0} + P_{1,1} + P_{1,N-1} + P_{2,0} + P_{0,0} & \cdots & -4P_{1,N-1} + P_{1,0} + P_{1,N-2} + P_{2,N-1} + P_{0,N-1} \\ \vdots & \ddots & \vdots \\ -4P_{M-1,0} + P_{M-1,1} + P_{M-1,N-1} + P_{0,0} + P_{M-2,0} & \cdots & -4P_{M-1,N-1} + P_{M-1,0} + P_{M-1,N-2} + P_{0,N-1} + P_{M-2,N-1} \end{pmatrix}$$

$$\cdots \text{[Equation 11]}$$

Under the above discretization regulation, an optimization problem (Equation 4) for the phase distribution can be analyzed in the framework of linear algebra.

The (M,N) matrix itself is hereinafter handled as an abstract vector. That is, to A, $B \in C^{M \times N}$, and $\alpha \in C$, when A+B and $\alpha A$ are defined as a sum of matrices and a scalar product, respectively, $C^{M \times N}$ becomes a linear space as a result of the above calculation.

Further, differential operators in Equations 9 to 11 become linear operators closed on $C^{M \times N}$. It should be noted that a matrix inner product is defined as follows.

[Math. 12]

$$\langle A, B \rangle = \sum_{m=0}^{M-1} \sum_{n=0}^{N-1} A^{*}_{m,n} B_{m,n} \qquad \cdots \text{[Equation 12]}$$

Accordingly, a matrix norm is as indicated below.

[Math. 13]

$$\|A\| = \sqrt{\langle A, A \rangle} = \sqrt{\sum_{m=1}^{M} \sum_{n}^{N} |A_{m,n}|^2} \qquad \cdots \text{[Equation 13]}$$

In the above-described framework, Equation 4 is rewritten into Equation 14 below.

[Math. 14]

$$\hat{P} = \arg\min_{P \in C^{M \times N}} \left\| I_P - 1 + f\nabla^2 P \right\|^2 \qquad \cdots \text{[Equation 14]}$$

Here, $I_p = \{\hat{I} \sim (ux_{m,n}, uy_{m,n})\}_{m,n}$. However, Equation 15 below is established.

[Math. 15]

$$ux_{m,n} = x_{m,n} + f\left(\frac{\partial}{\partial x}P\right)_{m,n} \quad , \quad uy_{m,n} = y_{m,n} + f\left(\frac{\partial}{\partial y}P\right)_{m,n}$$

$$\cdots[\text{Equation } 15]$$

Consequently, it should be noted that, in reality, $I_p$ is a matrix having a P dependency.

The optimization problem (Equation 4) for the phase distribution is difficult to solve because of nonlinearity of the above-mentioned $I_p$ with respect to P. If $I_p$ is a constant matrix, Equation 14 indicates a least-squares problem of the linear equation "f$\nabla$2P = 1 - $I_p$," a least-squares solution can be exactly obtained as indicated in the equation "P^ = (f$\nabla^2$)†(1 - $I_p$)." Here, (f$\nabla^2$)† is a Moore-Penrose generalized inverse element with respect to the calculation f$\nabla^2$. Particularly, in the case of this problem, a relation between an eigenvalue and eigenvector of a convolution operation $\nabla^2$ and a discrete Fourier transform can be used to configure the Moore-Penrose generalized inverse element as an operation capable of performing high-speed calculation.

In order to solve a nonlinear optimization problem (Equation 14), the proximity algorithm performs iterative optimization by using the proximity method. More specifically, on the assumption that the values of target intensity distribution sampled at grid points (ux$^{(i)}$, uy$^{(i)}$) calculated by Equation 15 with respect to a provisional value P$^{(i)}$ of the phase distribution are expressed by the equation "I$^{(i)}_p$ = {I^~(ux$^{(i)}_{m,n}$,uy$^{(i)}_{m,n}$)}$_{m,n}$," a phase modulation distribution P that further decreases a norm $\|I_p - 1 + f\nabla^2P\|^2$ can be determined, in the vicinity of P$^{(i)}$, where the P dependency of $I_p$ can be sufficiently negligible, as a P$^{(i)}$ proximity solution of a linear least-squares problem obtained by replacing $I_p$ in Equation 14 by a constant matrix I$^{(i)}$P. Therefore, P should be updated by such a proximity solution P$^{(i+1)}$. Individual steps for iterative optimization based on the above-described strategy are as indicated in Equation 16 below.

[Math. 16]

$$P^{(i+1)} = \underset{P \in \mathbb{C}^{M \times N}}{\arg\min} \quad \left\|I^{(i)}_p - 1 + f\nabla^2P\right\|^2 + \gamma\left\|P - P^{(i)}\right\|^2$$

$$\cdots[\text{Equation } 16]$$

Here, $\gamma\|P - P^{(i)}\|^2$ is a regularization term indicating the closeness of P to P$^{(i)}$. In order to increase the stability of optimization, the proximity algorithm introduces regularization regarding the curvature $\nabla^2$P of P, and defines an update formula as indicated below.

[Math. 17]

$$P^{(i+1)} = \underset{P \in \mathbb{C}^{M \times N}}{\arg\min} \quad \left\|I^{(i)}_p - 1 + f\nabla^2P\right\|^2 + \gamma\left\|P - P^{(i)}\right\|^2 + \alpha\left\|f\nabla^2P\right\|^2$$

$$\cdots[\text{Equation } 17]$$

Equation 17 is solved by using a matrix set $\{F^{(k,l)}_{M,N} \in \mathbb{C}^{M \times N}$ (k = 0, 1, ...M-1, l = 0, 1, ...N-1)\} defined by the following equation.

[Math. 18]

$$F_{M,N}^{(k,l)} = \left\{ \frac{1}{\sqrt{MN}} \sigma_M^{k \cdot m} \sigma_N^{l \cdot n} \right\}_{m,n}$$

$$= \frac{1}{\sqrt{MN}} \begin{pmatrix} 1 & \sigma_N^l & \sigma_N^{l \cdot 2} & \cdots & \sigma_N^{l \cdot (N-1)} \\ \sigma_M^k & \sigma_M^k \sigma_N^l & \sigma_M^k \sigma_N^{l \cdot 2} & \cdots & \sigma_M^k \sigma_N^{l \cdot (N-1)} \\ \sigma_M^{(k-1) \cdot 2} & \sigma_M^{(k-1) \cdot 2} \sigma_N^{(l-1)} & \sigma_M^{(k-1) \cdot 2} \sigma_N^{k \cdot 2} & \cdots & \sigma_M^{k \cdot 2} \sigma_N^{l \cdot (N-1)} \\ \vdots & \vdots & \vdots & \ddots & \vdots \\ \sigma_M^{k \cdot (M-1)} & \sigma_M^{k \cdot (M-1)} \sigma_N^l & \sigma_M^{k \cdot (M-1)} \sigma_N^{l \cdot 2} & \cdots & \sigma_M^{k \cdot (M-1)} \sigma_N^{l \cdot (N-1)} \end{pmatrix}$$

$$\cdots \text{[Equation 18]}$$

Here, the following equation is established.
[Math. 19]

$$\sigma_M = \exp\left(\frac{2\pi j}{M}\right), \quad \sigma_N = \exp\left(\frac{2\pi j}{N}\right). \cdots \text{[Equation 19]}$$

This matrix set $\{F_{M,N}^{(k,l)}\}$ has the following important properties.

(1) $<F_{M,N}^{(k',l')}, F_{M,N}^{(k,l)}> = \delta_{k',k}\delta_{l',l}$, $\{F_{M,N}^{(k,l)}\}$ represents the orthonormal basis of $C^{M \times N}$.
(2) A result obtained when expansion coefficients $\{F_{M,N}^{(k,l)}, A\}$ provided by $\{F_{M,N}^{(k,l)}\}$ of a certain matrix $A \in CM \times N$ are arranged as a (M,N) matrix is referred to as a discrete Fourier transform, and written as DFT[A]: = $\{F_{M,N}^{(k,l)}, A\}_{k,l}$. Further, conversely, in contrast to a discrete Fourier transform B of a matrix A, the original matrix A is referred to as an inverse discrete Fourier transform of B, and written as IDFT[B] : = $\Sigma_{k,l}B_{k,l}F_{M,N}^{(k,l)}$. The discrete Fourier transform and the inverse discrete Fourier transform can be rapidly calculated by an algorithm called a fast Fourier transform.
(3) $\{F_{M,N}^{(k,l)}\}$ is the eigenvector of a convolution operation by any kernel $K \in C^{M \times N}$. The eigenvalue corresponding to each eigenvector $F_{M,N}^{(k,l)}$ is calculated as expressed in the equation $\lambda_{M,N}^{(k,l)} = (\sqrt{MN})DFT[K]_{k,l}$ (it should be noted that $(\sqrt{MN})$ denotes the square root of MN) .

Equation 20 below can be established in accordance with the thesis about the proximity algorithm (Reference 1) .
[Math. 20]

$$f\nabla^2 P = A \otimes P, \quad 1 - I_P^{(i)} = b \cdots \text{[Equation 20]}$$

Accordingly, Equation 17 is rewritten by a normal basis $\{F_{M,N}^{(k,l)}\}$ to express components as indicated in Equation 21 below.
[Math. 21]

$$P^{(i+1)} = \underset{P \in \mathbb{C}^{M \times N}}{\arg \min} \left\| A \otimes P - b \right\|^2 + \left\| \sqrt{\gamma}P - \sqrt{\gamma}P^{(i)} \right\|^2 + \left\| \sqrt{\alpha}A \otimes P \right\|^2$$

$$= \underset{P \in \mathbb{C}^{M \times N}}{\arg \min} \sum_{k=0}^{M-1} \sum_{l=0}^{N-1} \left| \sqrt{MN}\ \mathrm{DFT}\,[A]_{k,l} \cdot \mathrm{DFT}\,[P]_{k,l} - \mathrm{DFT}\,[b]_{k,l} \right|^2$$

$$+ \left| \sqrt{\gamma}\ \mathrm{DFT}\,[P]_{k,l} - \sqrt{\gamma}\ \mathrm{DFT}\left[P^{(i)}\right]_{k,l} \right|^2 + \left| \sqrt{\alpha}\sqrt{MN}\ \mathrm{DFT}\,[A]_{k,l} \cdot \mathrm{DFT}\,[P]_{k,l} \right|^2$$

$$\cdots [\text{Equation 21}]$$

When a later-described "lemma" is used here, the individual components of discrete Fourier transform of $P^{(i+1)}$ are as indicated in the equation below.
[Math. 22]

$$\mathrm{DFT}\left[P^{(i+1)}\right]_{k,l} = \frac{\sqrt{MN}\ \mathrm{DFT}\,[A]_{k,l}^{*} \cdot \mathrm{DFT}\,[b]_{k,l} + \gamma\ \mathrm{DFT}\left[P^{(i)}\right]_{k,l}}{MN\left|\mathrm{DFT}\,[A]_{k,l}\right|^2 + \gamma + \alpha MN\left|\mathrm{DFT}\,[A]_{k,l}\right|^2}$$

$$= \frac{\sqrt{MN}\ \mathrm{DFT}\,[A]_{k,l}^{*} \cdot \mathrm{DFT}\,[b]_{k,l} + \gamma\ \mathrm{DFT}\left[P^{(i)}\right]_{k,l}}{(1+\alpha)\,MN\left|\mathrm{DFT}\,[A]_{k,l}\right|^2 + \gamma}$$

$$\cdots [\text{Equation 22}]$$

$P^{(i+1)}$ can be calculated by inverse discrete Fourier transforming the above.

The Fourier transform FT[·] in the thesis about the proximity algorithm and the discrete Fourier transform DFT[·] in the present embodiment correspond to DFT[·] = FT[ ·]/√MN. Further, the eigenvalue DFT[A]$_{k,l}$ of f∇$^2$ is a real number. Therefore, when Equation 22 is rewritten as indicated in Reference 1, Equation 23 below is obtained.
[Math. 23]

$$\mathrm{FT}\left[P^{(i+1)}\right]_{k,l} = \frac{\mathrm{FT}[A]_{k,l} \cdot \mathrm{FT}[b]_{k,l} + \gamma\ \mathrm{FT}\left[P^{(i)}\right]_{k,l}}{(1+\alpha)\,\mathrm{FT}[A]_{k,l}^{2} + \gamma} \quad \cdots [\text{Equation 23}]$$

In Reference 1, a complex conjugate sign is attached to the numerator FT[A]$_{k,l}$ of Equation 23. However, since FT[A]$_{k,l}$ is a real number as mentioned above, the presence of the complex conjugate sign is meaningless.

"Lemma"

With respect to $a_1$, $a_2$, $a_3$, $b_1$, $b_2$, $b_3$, and $z \in \mathbb{c}$, $f(z) = |a_1 z - b_1|^2 + |a_2 z - b_2|^2 + |a_3 z - b_3|^2$ is minimized as expressed in Equation 24 below.
[Math. 24]

$$\tilde{z} = \frac{a_1^{*}b_1 + a_2^{*}b_2 + a_3^{*}b_3}{|a_1|^2 + |a_2|^2 + |a_3|^2} \quad \cdots [\text{Equation 24}]$$

"Proof"

Division is made into a real part and an imaginary part, such as $a_1 = a_1^{(real)} + ja_1^{(imag)}$, $z = x + j\,y$.
[Math. 25]

$$f(z) = \left(a_1^{(real)}x - a_1^{(imag)}y - b_1^{(real)}\right)^2 + \left(a_1^{(imag)}x - a_1^{(real)}y - b_1^{(imag)}\right)^2$$
$$+ \left(a_2^{(real)}x - a_2^{(imag)}y - b_2^{(real)}\right)^2 + \left(a_2^{(imag)}x - a_2^{(real)}y - b_2^{(imag)}\right)^2$$
$$+ \left(a_3^{(real)}x - a_3^{(imag)}y - b_3^{(real)}\right)^2 + \left(a_3^{(imag)}x - a_3^{(real)}y - b_3^{(imag)}\right)^3$$

$\cdots$[Equation 25]

When calculated from the above, it is understood that the following equation is obtained.
[Math. 26]

$$\frac{\partial f(z)}{\partial x} = 0$$
$$\Leftrightarrow \quad \tilde{x} = \frac{a_1^{(real)}b_1^{(real)} + a_1^{(imag)}b_1^{(imag)} + a_2^{(real)}b_2^{(real)} + a_2^{(imag)}b_2^{(imag)} + a_3^{(real)}b_3^{(real)} + a_3^{(imag)}b_3^{(imag)}}{|a_1|^2 + |a_2|^2 + |a_3|^2}$$

$$\frac{\partial f(z)}{\partial y} = 0$$
$$\Leftrightarrow \quad \tilde{y} = \frac{a_1^{(real)}b_1^{(imag)} - a_1^{(imag)}b_1^{(real)} + a_2^{(real)}b_2^{(imag)} - a_2^{(imag)}b_2^{(real)} + a_3^{(real)}b_3^{(imag)} - a_3^{(imag)}b_3^{(real)}}{|a_1|^2 + |a_2|^2 + |a_3|^2}$$

$\cdots$[Equation 26]

Further, the Hessian matrix is positive definite for all x,y as indicated below.
[Math. 27]

$$\begin{pmatrix} \frac{\partial^2 f(z)}{\partial^2 x} & \frac{\partial^2 f(z)}{\partial x \partial y} \\ \frac{\partial^2 f(z)}{\partial y \partial x} & \frac{\partial^2 f(z)}{\partial^2 y} \end{pmatrix} = \begin{pmatrix} 2|a_1|^2 + 2|a_2|^2 + 2|a_3|^2 & 0 \\ 0 & 2|a_1|^2 + 2|a_2|^2 + 2|a_3|^2 \end{pmatrix}$$

$\cdots$[Equation 27]

Accordingly, the minimum point of f(z) is as expressed in the equation below.
[Math. 28]

$$\tilde{z} = \tilde{x} + j\tilde{y} = \frac{a_1^* b_1 + a_2^* b_2 + a_3^* b_3}{|a_1|^2 + |a_2|^2 + |a_3|^2}$$

$\cdots$[Equation 28]

Q.E.D.

It can be said that the proximity algorithm described in Reference 1 is a method of giving priority to a calculation

**14**

speed by sacrificing the reproducibility of target intensity distribution.

Meanwhile, the present embodiment proposes a new Freeform algorithm (hereinafter referred to as the "new algorithm") that reproduces the target intensity distribution as faithfully as possible.

The new algorithm aims to determine a phase distribution that minimizes the error between an actual reproduced image and a target intensity distribution. More specifically, the phase distribution to be determined is a solution $P^\wedge$ of the nonlinear optimization problem of Equation 29 below.

[Math. 29]

$$\hat{P} = \arg\min_{P} \iint \left\{ \tilde{I}(ux, uy) - \frac{1}{1 + f\nabla^2 P + f^2 \frac{\partial^2}{\partial x^2}P \cdot \frac{\partial^2}{\partial y^2}P - f^2 \left(\frac{\partial^2}{\partial x \partial y}P\right)^2} \right\}^2 dxdy$$

$$\cdots \text{[Equation 29]}$$

The proximity problem determines, in the i-th step of an optimization loop, an updated value $P^{(i+1)}$ of the phase distribution according to a linearized model around $P = 0$ without regard to the provisional value $P^{(i)}$ of a prevailing phase distribution. Meanwhile, the new algorithm first calculates an error amount (error distribution) $error^{(i)}$ of intensity distribution in the provisional value $P^{(i)}$ according to an exact ray-optics model as indicated in Equation 30 below. Here, the "exact ray-optics model" denotes a ray-optics model that includes a nonlinear term as indicated in the earlier Equation 4.

[Math. 30]

$$error^{(i)} = \tilde{I}(ux^{(i)}, uy^{(i)}) - \frac{1}{1 + f\nabla^2 P^{(i)} + f^2 \frac{\partial^2}{\partial x^2}P^{(i)} \cdot \frac{\partial^2}{\partial y^2}P^{(i)} - f^2 \left(\frac{\partial^2}{\partial x \partial y}P^{(i)}\right)^2}$$

$$\cdots \text{[Equation 30]}$$

It is assumed that the result obtained by multiplying the error amount (error distribution) $error^{(i)}$ by a feedback gain G is a light intensity correction value $\Delta I^{(i)} = G \cdot error^{(i)}$. When, in this instance, the exact ray-optics model is linearized around the provisional value $P^{(i)}$, Equation 31 below is obtained.

[Math. 31]

$$\frac{1}{1 + f\nabla^2 \left(P^{(i)} + \Delta P\right) + f^2 \frac{\partial^2}{\partial x^2}\left(P^{(i)} + \Delta P\right) \cdot \frac{\partial^2}{\partial y^2}\left(P^{(i)} + \Delta P\right) - f^2 \left(\frac{\partial^2}{\partial x \partial y}\left(P^{(i)} + \Delta P\right)\right)^2}$$

$$\approx \frac{1}{1 + f\nabla^2 P^{(i)} + f^2 \frac{\partial^2}{\partial x^2}P^{(i)} \cdot \frac{\partial^2}{\partial y^2}P^{(i)} - f^2 \left(\frac{\partial^2}{\partial x \partial y}P^{(i)}\right)^2} - f\nabla^2 \Delta P \qquad .$$

$$\cdots \text{[Equation 31]}$$

Accordingly, in a case where the light intensity correction value $\Delta I^{(i)}$ is sufficiently small, a phase correction value $\Delta P^{(i)}$ for implementing such a light intensity correction value is given below as an inverse calculation of a linear term "$-f\nabla^2\Delta P$" of Equation 31 with respect to $\Delta I^{(i)}$.

[Math. 32]

$$\Delta P^{(i)} = \underset{\Delta P}{\arg\min} \iint \left\{ \Delta I^{(i)} - \left( -f \nabla^2 \Delta P \right) \right\}^2 dxdy$$

$$\cdots [\text{Equation } 32]$$

When an earlier-mentioned discrete representation is applied again here, Equation 33 below is derived from Equation 32.
[Math. 33]

$$
\begin{aligned}
\Delta P^{(i)} &= \underset{\Delta P \in \mathbb{C}^{M \times N}}{\arg\min} \left\| f \nabla^2 \Delta P + \Delta I^{(i)} \right\|^2 \\
&= \underset{\Delta P \in \mathbb{C}^{M \times N}}{\arg\min} \left\| A \otimes \Delta P + \Delta I^{(i)} \right\|^2 \\
&= \underset{\Delta P \in \mathbb{C}^{M \times N}}{\arg\min} \sum_{k=0}^{M-1} \sum_{l=0}^{N-1} \left| \sqrt{MN}\, \text{DFT}[A]_{k,l} \cdot \text{DFT}[\Delta P]_{k,l} + \text{DFT}\left[\Delta I^{(i)}\right]_{k,l} \right|^2
\end{aligned}
$$

$$\cdots [\text{Equation } 33]$$

Here, when attention is paid to $(k,l) = (0,0) \leftrightarrow \text{DFT}[A]_{k,l} = 0$, the individual components of discrete Fourier transform of the phase correction value $\Delta P^{(i)}$ are as indicated in Equation 34 below.
[Math. 34]

$$
DFT\left[\Delta P^{(i)}\right]_{k,l} = \begin{cases} any \ real \ number, & (k,l) = (0,0) \\ -DFT\left[\Delta I^{(i)}\right]_{k,l}/\sqrt{MN}\, DFT[A]_{k,l}, & otherwise \end{cases}
$$

$$\cdots [\text{Equation } 34]$$

The phase distribution should be updated by adding, to $P^{(i)}$, the phase correction value $\Delta P^{(i)}$ obtained by inverse discrete Fourier transforming the above.

The optimization loop provided by the new algorithm described above is illustrated in FIG. 6.

In FIG. 6, a ray-optics model F1 calculates $I^{(i)}$ from $P^{(i)}$ according to the earlier Equation 4.

With respect to the provisional value $P^{(i)}$ of the phase distribution, a target intensity resampling section F2 calculates, as a target intensity $I^{\wedge}\sim(ux^{(i)},uy^{(i)})$, the values of target intensity distribution resampled at unequally spaced grid points $(ux^{(i)},uy^{(i)})$ on the projection plane Sp, which are calculated by Equation 15. Here, as is obvious from Equations 2 and 4, the unequally spaced grid points $(ux^{(i)},uy^{(i)})$ on the projection plane Sp are simultaneously calculated during an $I^{(i)}$ calculation process in the ray-optics model F1. Based on information about the grid points $(ux^{(i)},uy^{(i)})$ calculated in the ray-optics model F1 as described above, the target intensity resampling section F2 calculates the target intensity $I^{\wedge}\sim(ux^{(i)},uy^{(i)})$.

As depicted in FIG. 6, the difference between $I^{(i)}$ and target intensity $I^{\wedge}\sim(ux^{(i)},uy^{(i)})$, which are calculated in the ray-optics model F1, is calculated as the error distribution error$^{(i)}$, and the light intensity correction value $\Delta I^{(i)}$ is obtained by multiplying the error distribution error$^{(i)}$ by the feedback gain G. A linear term inverse calculation section F3 calculates the phase correction value $\Delta P^{(i)}$ by performing the calculation indicated in Equation 34 according to the light intensity correction value $\Delta I^{(i)}$. The calculated phase correction value $\Delta P^{(i)}$ is then added to the provisional value $P^{(i)}$ in order to obtain a new provisional value $P^{(i+1)}$. The resulting phase distribution $P^{(i+1)}$ is inputted to the ray-optics model F1 in order to form a feedback loop.

Here, $\Delta I^{(i)}$ needs to be made sufficiently small in order to assure the reliability of the phase correction value $\Delta P^{(i)}$, which is derived from an inverse calculation of a linear term. Therefore, a small value should preferably be selected as the feedback gain G. However, even in a case where G = 0.1, error$^{(i)}$ is close in amount to the target intensity $I^{\wedge}\sim(ux^{(i)},uy^{(i)})$ itself at an initial stage of the optimization loop with respect to a high-contrast target image. Accordingly, $\Delta I^{(i)} = 0.1 \cdot$error$^{(i)}$, which is derived from multiplication by the feedback gain G, is outside the effective range of linear approximation. Consequently, the feedback gain G is not initially fixed at a constant $G_0$. Instead, the permissible values $\Delta I_{max}$ of absolute values of maximum and minimum values of $\Delta I^{(i)}$ are predetermined. Then, at the initial stage of the optimization loop, error$^{(i)}$ is scaled in such a manner that all components of $\Delta I^{(i)}$ are within the range of $-\Delta I_{max}$ to $+\Delta I_{max}$. Subsequently, when error$^{(i)}$ is decreased to a certain extent, the feedback gain G is dynamically adjusted in such a manner that $G = G_0$.

FIG. 7 schematically depicts the image of dynamic adjustment of the gain G. In a case where the permissible values $\Delta I_{max}$ are exceeded by the maximum values of absolute values of the light intensity correction value $\Delta I^{(i)}$ obtained by multiplying error$^{(i)}$ by the constant $G_0$, the gain G is adjusted in such a manner that portions beyond the permissible values $\Delta I_{max}$, which are shaded in FIG. 7, are within the range of $-\Delta I_{max}$ to $+\Delta I_{max}$.

For example, a selection is made in such a manner that $G_0 = 0.1$ while $\Delta I_{max} = 0.01$ (the average intensity of incident light and target intensity distribution is 1). Then, at each step i, G should be set based on error$^{(i)}$ as indicated in Equation 35 below.

[Math. 35]

$$G = \begin{cases} \dfrac{\Delta I_{max}}{\max\left(\left|\max(\text{error}^{(i)})\right|, \left|\min(\text{error}^{(i)})\right|\right)}, & \text{if } G_0 \cdot \max\left(\left|\max(\text{error}^{(i)})\right|, \left|\min(\text{error}^{(i)})\right|\right) > \Delta I_{max} \\ G_0, & \text{otherwise} \end{cases}$$

$$\cdots \text{[Equation 35]}$$

By using a ray-optics model including a nonlinear term, the new algorithm described above makes it possible to accurately determine a phase distribution for reproducing a target light intensity distribution.

However, it is assumed that the intensity distribution of light incident on the phase modulation plane Sm is even. Therefore, the light intensity distribution of the incident light is superimposed on a reproduced image having an uneven phase distribution that is derived from the above-described new algorithm.

Meanwhile, when an incident light intensity distribution I$^{(Incident)}$ is known, a phase distribution corrected for canceling the incident light intensity distribution and reproducing the target intensity distribution can be obtained by reflecting I$^{(Incident)}$ in the ray-optics model F1 in the loop of nonlinear optimization in the new algorithm and its linear term inverse calculation section F3.

FIG. 8 illustrates an optimization loop provided by a phase distribution calculation algorithm according to the embodiment for reflecting the incident light intensity distribution as described above.

As illustrated in FIG. 8, the optimization loop in the above case is provided with a ray-optics model F1' and a linear term inverse calculation section F3', respectively, instead of the ray-optics model F1 and the linear term inverse calculation section F3, which are depicted in FIG. 6. The incident light intensity distribution I$^{(Incident)}$ is reflected in the ray-optics model F1' and in the linear term inverse calculation section F3'.

The incident light intensity distribution I$^{(Incident)}$ may be reflected when I$^{(Incident)}$ is weighted in the numerical formulae described in conjunction with the new algorithm on the basis of individual coordinate components.

More specifically, Equation 30 is calculated as indicated below.

[Math. 36]

$$\text{error}^{(i)} = \tilde{I}(ux^{(i)}, uy^{(i)}) - \frac{I^{(Incident)}}{1 + f\nabla^2 P^{(i)} + f^2 \frac{\partial^2}{\partial x^2} P^{(i)} \cdot \frac{\partial^2}{\partial y^2} P^{(i)} - f^2 \left(\frac{\partial^2}{\partial x \partial y} P^{(i)}\right)^2}$$

$$\cdots \text{[Equation 36]}$$

The linear term of the model is corrected to I$^{(Incident)}$·$(-f\nabla^2 \Delta P)$. Therefore, the phase correction value $\Delta P^{(i)}$ should be calculated as a least-squares solution of a linear equation (Equation 37) as expressed in Equation 38.

[Math. 37]

$$I^{(\text{Incident})} \cdot \left(-f\nabla^2 \Delta P\right) = \Delta I^{(i)} \qquad \cdots [\text{Equation 37}]$$

[Math. 38]

$$\Delta P^{(i)} = \underset{\Delta P \in \mathbb{C}^{M \times N}}{\arg\min} \left\| I^{(\text{Incident})} \cdot \left(f\nabla^2 \Delta P\right) + \Delta I^{(i)} \right\|^2 \qquad \cdots [\text{Equation 38}]$$

However, for the sake of simplicity, the phase correction value $\Delta P^{(i)}$ is calculated as a least-squares solution of a linear equation (Equation 39) as expressed in Equation 40.
[Math. 39]

$$\left(-f\nabla^2 \Delta P\right) = \Delta I^{(i)} / I^{(\text{Incident})} \qquad \cdots [\text{Equation 39}]$$

[Math. 40]

$$\Delta P^{(i)} = \underset{\Delta P \in \mathbb{C}^{M \times N}}{\arg\min} \left\| f\nabla^2 \Delta P + \Delta I^{(i)} / I^{(\text{Incident})} \right\|^2 \qquad \cdots [\text{Equation 40}]$$

The individual components of discrete Fourier transform of the phase correction value $\Delta P^{(i)}$ are as indicated in Equation 41 below.
[Math. 41]

$$DFT\left[\Delta P^{(i)}\right]_{k,l}$$

$$= \begin{cases} any\ \ real\ \ number, & (k,l) = (0,0) \\ -DFT\left[\Delta I^{(i)} / I^{(\text{Incident})}\right]_{k,l} / \sqrt{MN} DFT[A]_{k,l}, otherwise \end{cases}$$

$$\cdots [\text{Equation 41}]$$

In reality, however, information about the incident light intensity distribution need not always be additionally incorporated in the inverse calculation model as indicated in Equation 41 above. Even when a phase correction amount is determined by using the earlier Equation 34, it is possible to obtain a phase distribution that offsets the influence of the incident light intensity distribution. However, it is necessary to incorporate the information about the incident light intensity distribution in a ray-optics model that performs a forward calculation.

When the information about the incident light intensity distribution is additionally incorporated in the inverse calculation model as indicated in Equation 41, stable convergence can be generally achieved. However, in a case where, for example, the incident light intensity distribution partially has an extremely low light intensity value, "$I^{(i)}/I^{(\text{Incident})}$" in Equation 41 has extremely high component values. This may result in unstable convergence. In such a case, Equation 34 should preferably be used (i.e., the information about the incident light intensity distribution should not be incorporated in the inverse calculation model) on the assumption that the information about the incident light intensity distribution is incorporated in the ray-optics model.

Here, in the illumination apparatus 1 according to the first embodiment, information indicative of the incident light intensity distribution $I^{(Incident)}$ with respect to the phase modulation plane Sm is stored, for example, in a storage such as the ROM in the control section 5. Based on the stored information about the incident light intensity distribution $I^{(Incident)}$, the phase distribution calculation section 5b performs a process of calculating a phase distribution for reproducing a target light intensity distribution on the projection plane Sp by using a calculation method described with reference to the preceding numerical formulae.

In the first embodiment, the incident light intensity distribution $I^{(Incident)}$ with respect to the phase modulation plane Sm is, for example, pre-measured prior to factory shipment of the illumination apparatus 1 and stored in the illumination apparatus 1.

<2. Second Embodiment>

A second embodiment of the present technology will now be described.

The second embodiment is configured to cope with temporal changes in the incident light intensity distribution.

FIG. 9 is a diagram illustrating a configuration example of an illumination apparatus 1A according to the second embodiment.

It should be noted that, in the following description, portions similar to those explained thus far are designated by the same reference numerals as the counterparts and will not be redundantly described.

The illumination apparatus 1A differs from the illumination apparatus 1 depicted in FIG. 1 in that the former additionally includes an imaging section 6 and incorporates a control section 5A instead of the control section 5.

The imaging section 6 includes, for example, an imaging element, such as a CCD (Charge Coupled Device) sensor or a CMOS (Complementary Metal Oxide Semiconductor) sensor, and captures an image of the light emitting surface of the light source section 2 to obtain the captured image that reflects the light intensity distribution of light incident on the phase modulation plane Sm.

The control section 5A differs from the control section 5 in that the former includes a phase distribution calculation section 5bA instead of the phase distribution calculation section 5b. The phase distribution calculation section 5bA generates information about the incident light intensity distribution $I^{(Incident)}$ based on the image captured by the imaging section 6, and based on the generated information about the incident light intensity distribution $I^{(Incident)}$, calculates the phase distribution for reproducing a target light intensity distribution on the projection plane Sp by using a calculation method similar to the calculation method used by the phase distribution calculation section 5b in the first embodiment.

As described above, the second embodiment incorporates the incident light intensity distribution $I^{(Incident)}$, which is obtained based on the image captured by the imaging section 6, in both the ray-optics model F1' and the linear term inverse calculation section F3'.

Therefore, in a case where the incident light intensity distribution $I^{(Incident)}$ is temporally changed, the changed incident light intensity distribution $I^{(Incident)}$ can be reflected in both the ray-optics model F1' and the linear term inverse calculation section F3'.

Consequently, even in a case where the incident light intensity distribution $I^{(Incident)}$ temporally changes, it is possible to prevent the incident light intensity distribution from becoming superimposed on the reproduced image.

It should be noted that the second embodiment may also have a configuration where the information about the incident light intensity distribution $I^{(Incident)}$ is not incorporated in the inverse calculation model. In a case where such a configuration is adopted, the phase distribution calculation section 5b incorporates the incident light intensity distribution $I^{(Incident)}$, which is obtained based on the image captured by the imaging section 6, only in the ray-optics model F1'.

<3. Third Embodiment (Application to Projector Apparatus)>

A third embodiment of the present technology is configured such that the illumination apparatus according to the embodiment described earlier is applied to a projector apparatus.

FIG. 10 is a diagram illustrating a configuration example of a projector apparatus 10 to which the illumination apparatus 1 according to the first embodiment is applied.

As illustrated in FIG. 10, the projector apparatus 10 includes the light source section 2, the phase modulation SLM 3, and the drive section 4, as is the case with the illumination apparatus 1 depicted in FIG. 1, and additionally includes an intensity modulation SLM 11, a control section 12, and a drive section 13.

The intensity modulation SLM 11 includes, for example, a transmissive liquid crystal panel, and performs spatial light intensity modulation on the incident light. As depicted in FIG. 10, the intensity modulation SLM 11 is connected to the output stage of the phase modulation SLM 3. Therefore, light emitted from the light source section 2 and subjected to spatial light phase modulation by the phase modulation SLM 3 is incident on the intensity modulation SLM 11.

The projector apparatus 10 projects the reproduced image of the target image on a projection plane Sp' by projecting the light subjected to spatial light intensity modulation by the intensity modulation SLM 11 on the projection plane Sp'.

Here, as is obvious from the location of the depicted projection plane Sp, the phase distribution in this case is calculated by the Freeform method so as to reproduce a target light intensity distribution on an intensity modulation plane of the intensity modulation SLM 11.

It should be noted that, for example, a reflective spatial light phase modulator, such as a reflective liquid crystal panel or a DMD, may be used as the intensity modulation SLM 11.

The control section 12 includes a microcomputer that includes, for example, a CPU, a ROM, and a RAM, as is the case with the control section 5, calculates the phase distribution of the phase modulation SLM 3 based on a target image, calculates the light intensity distribution of the intensity modulation SLM 11, causes the drive section 4 to drive the phase modulation SLM 3 based on the calculated phase distribution, and causes the drive section 13 to drive the intensity modulation SLM 11 based on the calculated light intensity distribution.

As depicted in FIG. 10, the control section 12 includes the target intensity distribution calculation section 5a and the phase distribution calculation section 5b, as is the case with the control section 5. The target intensity distribution calculation section 5a and the phase distribution calculation section 5b calculates the phase distribution of the phase modulation SLM 3 for reproducing a target light intensity distribution on the projection plane Sp (the intensity modulation plane of the intensity modulation SLM 11 in this case) by using the similar calculation method as used in the first embodiment.

Further, the control section 12 includes an intensity distribution calculation section 12a. The intensity distribution calculation section 12a calculates the light intensity distribution that is to be set in the intensity modulation SLM 11 in order to reproduce the light intensity distribution of a target image on the projection plane Sp'.

More specifically, the intensity distribution calculation section 12a inputs the target image and the light intensity distribution I on the projection plane Sp, which is calculated by the phase distribution calculation section 5b, and calculates the light intensity distribution of the intensity modulation SLM 11 according to the inputted target image and light intensity distribution I. Here, the light intensity distribution I on the projection plane Sp is calculated in the ray-optics model F1' described with reference to FIG. 8. The light intensity distribution I used here is the light intensity distribution I that is calculated in the ray-optics model F1' when the phase distribution P is determined as the solution of the optimization loop.

In the projector apparatus 10, the light intensity distribution based on the phase distribution P is reproduced on the intensity modulation plane of the intensity modulation SLM 11. Therefore, when the light intensity distribution of the target image is to be reproduced on the projection plane Sp', the light intensity distribution in the intensity modulation SLM 11 may be set so as to cancel the difference between the light intensity distribution to be reproduced on the intensity modulation plane based on the phase distribution P and the light intensity distribution of the target image to be reproduced on the projection plane Sp'.

Accordingly, the intensity distribution calculation section 12a calculates the light intensity distribution of the target image to be reproduced on the projection plane Sp', and calculates the difference between the calculated light intensity distribution and the light intensity distribution I inputted from the phase distribution calculation section 5b. Then, based on the light intensity distribution calculated as the difference, the drive section 13 drives the intensity modulation SLM 11.

Incidentally, projector apparatuses in the past obtain the reproduced image by allowing the intensity modulation SLM 11 to perform spatial light intensity modulation on the light from the light source. However, spatial light intensity modulation partially blocks or dims the light incident from the light source. Therefore, light utilization efficiency is low, and contrast enhancement is difficult to achieve.

Meanwhile, when the illumination apparatus 1 for reproducing a desired light intensity distribution by spatial light phase modulation is applied to the projector apparatus as depicted in FIG. 10, it is possible to improve light utilization efficiency and achieve contrast enhancement of the reproduced image. In the configuration depicted in FIG. 10, reproducing the light intensity distribution according to the target image on the intensity modulation plane of the intensity modulation SLM 11 by allowing the phase modulation SLM 3 to perform spatial light phase modulation corresponds to the formation of an approximate light intensity distribution of the target image before spatial light intensity modulation by the intensity modulation SLM 11, and is similar to control exercised to provide generally-called area division drive of the backlight of a liquid-crystal display. However, the light intensity distribution in this instance is formed by phase modulation. This prevents a decrease in the utilization efficiency of the light from the light source.

In the above case, the intensity modulation SLM 11 arranges the details of the reproduced image of a generally-called low-frequency image, which is reproduced by the phase modulation SLM 3, and functions to reproduce a light intensity distribution according to the target image on the projection plane Sp'. This makes it possible to enhance the contrast of the reproduced image while suppressing a decrease in the resolution of the reproduced image.

It should be noted that the illumination apparatus 1A according to the second embodiment may be applied to the configuration of the projector apparatus.

FIG. 11 illustrates a configuration example of a projector apparatus 10A to which the illumination apparatus 1A is applied.

The projector apparatus 10A differs from the projector apparatus 10 depicted in FIG. 10 in that the former additionally includes the imaging section 6 and incorporates a control section 12A instead of the control section 12. The control section 12A differs from the control section 12 in that the former includes the phase distribution calculation section 5bA instead of the phase distribution calculation section 5b.

The imaging section 6 and the phase distribution calculation section 5bA will not be redundantly described herein because they have already been described in conjunction with the second embodiment.

<4. Modifications>

It should be noted that the embodiments of the present technology are not limited to the above-described specific examples. The configurations of the foregoing embodiments may be variously modified.

For example, there may be cases where the target image is a video image instead of a still image. In a case where the target image is a video image, it is conceivable that the phase distribution of the phase modulation SLM 3 and the light intensity distribution of the intensity modulation SLM 11 may be calculated on the basis of individual frame images. Meanwhile, in a case where the image contents of the frame images remain unchanged, the phase distribution and the light intensity distribution may not be calculated. Instead, the phase distribution and the light intensity distribution may be calculated in a case where the image contents of the frame images are changed.

Further, the second embodiment has been described on the assumption that the imaging section 6 detects the light intensity distribution of light incident on the phase modulation plane Sm. However, the method of detecting the light intensity distribution of the light incident on the phase modulation plane Sm is not limited to the method of using the imaging section 6. Alternatively, for example, a light emission amount sensor (a sensor for detecting the amount of light emitted from the associated light emitting element 2a) provided for each of the light emitting elements 2a in the light source section 2 may be used to detect the light intensity distribution of the light incident on the phase modulation plane Sm.

Moreover, the foregoing description has been made with reference to a case where the incident light intensity distribution $I^{(incident)}$ is incorporated in both the ray-optics model and the inverse calculation model and with reference to a case where the incident light intensity distribution $I^{(incident)}$ is incorporated only in the ray-optics model. However, it may alternatively be possible to provide a choice between incorporating the incident light intensity distribution $I^{(incident)}$ in both the ray-optics model and the inverse calculation model or only in the ray-optics model depending on the light intensity distribution morphology in the incident light intensity distribution.

<5. Summary of Embodiments>

As described above, a signal processing apparatus (control section 5, 5A, 12, or 12A) according to the embodiment of the present technology performs a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model (ray-optics model F1'), namely, a ray-optics model including a nonlinear term, and an inverse calculation model (linear term inverse calculation section F3') regarding a model obtained by linearizing the nonlinear ray-optics model, determine an error distribution (error distribution error) of error between the target light intensity distribution and a light intensity distribution calculated by the nonlinear ray-optics model according to a provisional value of the phase distribution, obtain a light intensity correction value ($\Delta I$) by multiplying the error distribution by a feedback gain (feedback gain G), input the light intensity correction value to the inverse calculation model to obtain an output, regard the obtained output as a phase correction value (phase correction value $\Delta P$), and use a feedback loop of repeatedly updating the phase distribution by adding the phase correction value to the provisional value.

Using a model such as the above-mentioned ray-optics model including a nonlinear term makes it possible to accurately determine the phase distribution for reproducing the target light intensity distribution.

Consequently, it is possible to improve the reproducibility of a reproduced image relative to a target light intensity distribution.

Further, the signal processing apparatus according to the embodiment of the present technology performs the calculation process of calculating the phase distribution in such a manner as to satisfy "Condition 1" and "Condition 2." "Condition 2" specifies that the term of the light intensity distribution of the incident light be incorporated in the nonlinear ray-optics model.

This ensures that performing a phase distribution calculation by using the feedback loop specified by "Condition 1" makes it possible to determine the phase distribution in such a manner as to cancel the incident light intensity distribution and reproduce the target light intensity distribution.

Consequently, it is possible to prevent the incident light intensity distribution from becoming superimposed on the reproduced image.

Furthermore, the signal processing apparatus according to the embodiment of the present technology performs the calculation process of calculating the phase distribution in such a manner as to satisfy "Condition 1" and "Condition 3." "Condition 3" specifies that the term of the light intensity distribution of the incident light be incorporated in both the nonlinear ray-optics model and the inverse calculation model.

Since the term of the incident light intensity distribution is incorporated not only in the ray-optics model but also in the inverse calculation model, stable convergence can be achieved in the phase distribution calculation performed by using the feedback loop specified in "Condition 1." More specifically, in a case where, for example, the incident light intensity distribution does not partially have an extremely low light intensity value as mentioned earlier, stable convergence can be achieved.

Moreover, the signal processing apparatus according to the embodiment of the present technology controls the feedback gain according to the absolute value of the error distribution (see FIG. 7 and Equation 35).

When the feedback loop specified in "Condition 1" is used, the light intensity correction value to be inputted in the inverse calculation model needs to be sufficiently small in order to assure the reliability of the phase correction value calculated by the inverse calculation model. Controlling the feedback gain according to the absolute value of the error distribution as described above makes it possible to prevent an excessive light intensity correction value from being inputted in the inverse calculation model.

Consequently, it is possible to properly determine the phase distribution for reproducing the target light intensity distribution.

Additionally, in a case where a predetermined value ($\Delta I_{max}$) is exceeded by the maximum value of the absolute value of the light intensity correction value obtained by multiplying the error distribution by the feedback gain based on a constant ($G_0$), the signal processing apparatus according to the embodiment of the present technology controls the feedback gain to decrease the maximum value of the absolute value of the light intensity correction value to a value not greater than the predetermined value. Meanwhile, in a case where the predetermined value is not exceeded by the maximum value of the absolute value of the light intensity correction value obtained by multiplying the error distribution by the feedback gain based on the constant, the signal processing apparatus uses the constant as the feedback gain.

This makes it possible to repeatedly correct the provisional value of the phase distribution by using a tiny light intensity correction value obtained by multiplying the error distribution by a feedback gain adjusted step by step, and then provide increased convergence by changing the feedback gain to the constant when the error distribution is made equal to or smaller than the predetermined value by the repeated correction.

Consequently, it is possible to properly determine the phase distribution for reproducing the target light intensity distribution.

Further, a signal processing method according to the embodiment of the present technology is adopted by a signal processing apparatus that performs a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

The above-described signal processing method also provides operations and advantages similar to those provided by the above-described signal processing apparatus according to the embodiment of the present technology.

Furthermore, a program according to the embodiment of the present technology is a program readable by computer equipment and adapted to cause the computer equipment to perform a calculation process of calculating a phase distribution for reproducing a target light intensity distribution on a projection plane by performing spatial light phase modulation on incident light in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

More specifically, the program according to the embodiment of the present technology is a program that causes, for example, the computer equipment, such as the control section 5 (or 5A) or the control section 12 (or 12A), to perform a process of the phase distribution calculation section 5b or 5bA.

The above-described program is able to implement the earlier-described signal processing apparatus according to the embodiment of the present technology.

Moreover, an illumination apparatus (illumination apparatus 1 or 1A or projector apparatus 10 or 10A) according to the embodiment of the present technology includes a light source section (light source section 2), a phase modulation section (phase modulation SLM 3), and a signal processing section (control section 5, 5A, 12, or 12A). The light source section has a light emitting element (light emitting element 2a). The phase modulation section performs spatial light phase modulation on incident light from the light source section. The signal processing section performs a calculation process of calculating a phase distribution for reproducing a target light intensity distribution on a projection plane by performing spatial light phase modulation in such a manner as to satisfy "Condition 1." "Condition 1" specifies that the calculation process include a nonlinear ray-optics model, namely, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

The above-described illumination apparatus according to the embodiment of the present technology also provides operations and advantages similar to those provided by the above-described signal processing apparatus according to the embodiment of the present technology.

Additionally, the illumination apparatus according to the embodiment of the present technology is configured such that the light source section has a plurality of light emitting elements.

This eliminates the necessity of using a single high-output light emitting element in the light source section in order to satisfy predetermined light intensity requirements.

Consequently, it is possible to reduce the cost of the light source section.

The illumination apparatus (illumination apparatus 1A or projector apparatus 10A) according to the embodiment of the present technology is configured such that the signal processing section performs a calculation process of calculating the phase distribution in such a manner as to satisfy "Condition 1" and "Condition 2." "Condition 2" specifies that the term of the light intensity distribution of the incident light be incorporated in the nonlinear ray-optics model. The illumination apparatus includes an intensity distribution detection section (imaging section 6) for detecting the light intensity distribution of incident light. The signal processing section (control section 5A or 12A) uses the light intensity distribution detected by the intensity distribution detection section as the light intensity distribution to be incorporated in the nonlinear ray-optics model.

This ensures that, in a case where the incident light intensity distribution temporally changes, the incident light intensity distribution resulting after a temporal change can be reflected in the nonlinear ray-optics model.

Consequently, even in a case where the incident light intensity distribution temporally changes, it is possible to prevent the incident light intensity distribution from becoming superimposed on the reproduced image.

It should be noted that advantages described in this document are merely illustrative and not restrictive. The present technology may additionally provide advantages other than those described in this document.

<6. Present Technology>

It should be noted that the present technology may adopt the following configurations as well.

(1) A signal processing apparatus that performs a calculation process of calculating a phase distribution for reproducing a target light intensity distribution on a projection plane by performing spatial light phase modulation on incident light,

in which the calculation process is performed in such a manner as to satisfy "Condition 1," and "Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

(2) The signal processing apparatus according to (1),

in which the signal processing apparatus performs a calculation process of calculating the phase distribution in such a manner as to satisfy "Condition 1" above and "Condition 2," and
"Condition 2" specifies that a term of the light intensity distribution of the incident light be incorporated in the nonlinear ray-optics model.

(3) The signal processing apparatus according to (1),

in which the signal processing apparatus performs a calculation process of calculating the phase distribution in such a manner as to satisfy "Condition 1" above and "Condition 3," and
"Condition 3" specifies that a term of the light intensity distribution of the incident light be incorporated in both the nonlinear ray-optics model and the inverse calculation model.

(4) The signal processing apparatus according to any one of (1) to (3),
in which the signal processing apparatus controls the feedback gain according to an absolute value of the error distribution.

(5) The signal processing apparatus according to (4),

in which, in a case where a predetermined value is exceeded by a maximum value of the absolute value of the light intensity correction value obtained by multiplying the error distribution by the feedback gain based on a constant, the feedback gain is controlled to decrease the maximum value of the absolute value of the light intensity correction value to a value not greater than the predetermined value, and
in a case where the predetermined value is not exceeded by the maximum value of the absolute value of the light intensity correction value obtained by multiplying the error distribution by the feedback gain based on the constant, the constant is used as the feedback gain.

(6) A signal processing method that is adopted by a signal processing apparatus configured to perform a calculation process of calculating a phase distribution for reproducing a target light intensity distribution on a projection plane by performing spatial light phase modulation on incident light,

in which the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

(7) A program that is readable by computer equipment and adapted to cause the computer equipment to perform a calculation process of calculating a phase distribution for reproducing a target light intensity distribution on a projection plane by performing spatial light phase modulation on incident light,

in which the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

(8) An illumination apparatus including:

a light source section that has a light emitting element;
a phase modulation section that performs spatial light phase modulation on incident light from the light source section; and
a signal processing section that performs a calculation process of calculating a phase distribution for reproducing a target light intensity distribution on a projection plane by performing the spatial light phase modulation, in which the calculation process is performed in such a manner as to satisfy "Condition 1," and "Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

(9) The illumination apparatus according to (8),
in which the light source section has a plurality of light emitting elements.
(10) The illumination apparatus according to (8) or (9),

in which the signal processing section performs a calculation process of calculating the phase distribution in such a manner as to satisfy "Condition 1" above and "Condition 2,"
"Condition 2" specifies that a term of the light intensity distribution of the incident light be incorporated in the nonlinear ray-optics model,
the signal processing section includes an intensity distribution detection section for detecting the light intensity distribution of the incident light, and
the signal processing section uses the light intensity distribution detected by the intensity distribution detection section as the light intensity distribution to be incorporated in the nonlinear ray-optics model.

[Reference Signs List]

1, 1A: Illumination apparatus
2: Light source section
2a: Light emitting element
3: Phase modulation SLM
4: Drive section
5, 5A: Control section
5a: Target intensity distribution calculation section
5b, 5bA: Phase distribution calculation section
6: Imaging section
Sp, Sp': Projection plane
Sm: Phase modulation plane
F1, F1': Ray-optics model
F2: Target intensity resampling section
F3, F3': Linear term inverse calculation section
10, 10A: Projector apparatus
11: Intensity modulation SLM
12, 12A: Control section
12a: Intensity distribution calculation section
13: Drive section

**Claims**

1. A signal processing apparatus that performs a calculation process of calculating a phase distribution for reproducing a target light intensity distribution on a projection plane by performing spatial light phase modulation on incident light,

wherein the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

2. The signal processing apparatus according to claim 1,

wherein the signal processing apparatus performs a calculation process of calculating the phase distribution in such a manner as to satisfy "Condition 1" above and "Condition 2," and
"Condition 2" specifies that a term of the light intensity distribution of the incident light be incorporated in the nonlinear ray-optics model.

3. The signal processing apparatus according to claim 1,

wherein the signal processing apparatus performs a calculation process of calculating the phase distribution in such a manner as to satisfy "Condition 1" above and "Condition 3," and
"Condition 3" specifies that a term of the light intensity distribution of the incident light be incorporated in both the nonlinear ray-optics model and the inverse calculation model.

4. The signal processing apparatus according to claim 1,
wherein the signal processing apparatus controls the feedback gain according to an absolute value of the error distribution.

5. The signal processing apparatus according to claim 4,

wherein, in a case where a predetermined value is exceeded by a maximum value of the absolute value of the light intensity correction value obtained by multiplying the error distribution by the feedback gain based on a constant, the feedback gain is controlled to decrease the maximum value of the absolute value of the light intensity correction value to a value not greater than the predetermined value, and
in a case where the predetermined value is not exceeded by the maximum value of the absolute value of the light intensity correction value obtained by multiplying the error distribution by the feedback gain based on the constant, the constant is used as the feedback gain.

6. A signal processing method that is adopted by a signal processing apparatus configured to perform a calculation process of calculating a phase distribution for reproducing a target light intensity distribution on a projection plane by performing spatial light phase modulation on incident light,

wherein the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

7. A program that is readable by computer equipment and adapted to cause the computer equipment to perform a calculation process of calculating a phase distribution for reproducing a target light intensity distribution on a projection plane by performing spatial light phase modulation on incident light,

wherein the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

8. An illumination apparatus comprising:

a light source section that has a light emitting element;
a phase modulation section that performs spatial light phase modulation on incident light from the light source section; and
a signal processing section that performs a calculation process of calculating a phase distribution for reproducing a target light intensity distribution on a projection plane by performing the spatial light phase modulation, wherein the calculation process is performed in such a manner as to satisfy "Condition 1," and
"Condition 1" specifies that the calculation process include a nonlinear ray-optics model, that is, a ray-optics model including a nonlinear term, and an inverse calculation model regarding a model obtained by linearizing the nonlinear ray-optics model, determine an error distribution of error between the target light intensity distribution and a light intensity distribution calculated by the nonlinear ray-optics model according to a provisional value of the phase distribution, obtain a light intensity correction value by multiplying the error distribution by a feedback gain, input the light intensity correction value to the inverse calculation model to obtain an output, regard the obtained output as a phase correction value, and use a feedback loop of repeatedly updating the phase distribution by adding the phase correction value to the provisional value.

9. The illumination apparatus according to claim 8,
wherein the light source section has a plurality of light emitting elements.

10. The illumination apparatus according to claim 8,

wherein the signal processing section performs a calculation process of calculating the phase distribution in such a manner as to satisfy "Condition 1" above and "Condition 2,"
"Condition 2" specifies that a term of the light intensity distribution of the incident light be incorporated in the nonlinear ray-optics model,
the signal processing section includes an intensity distribution detection section configured to detect the light intensity distribution of the incident light, and
the signal processing section uses the light intensity distribution detected by the intensity distribution detection section as the light intensity distribution to be incorporated in the nonlinear ray-optics model.

# FIG.1

Sp (PROJECTION PLANE)

3 (PHASE MODULATION SLM)

Sm

2

LIGHT SOURCE SECTION

4

DRIVE SECTION

CONTROL SECTION

5b

PHASE DISTRIBUTION CALCULATION SECTION

5

5a

TARGET IMAGE

TARGET INTENSITY DISTRIBUTION CALCULATION SECTION

1 (ILLUMINATION APPARATUS)

FIG.2

FIG.3

PHASE DISTRIBUTION

FIG.4

A

B

# FIG.5

EP 4 137 880 A1

# FIG.6

# FIG.7

ΔImax

ΔImax

# FIG.8

EP 4 137 880 A1

# F I G . 9

Sp (PROJECTION PLANE)

3 (PHASE MODULATION SLM)

2

LIGHT SOURCE
SECTION

IMAGING
SECTION

6

DRIVE
SECTION

4

CONTROL SECTION

PHASE DISTRIBUTION
CALCULATION
SECTION

5bA

5A

5a

TARGET IMAGE

TARGET INTENSITY
DISTRIBUTION
CALCULATION SECTION

1A (ILLUMINATION APPARATUS)

# FIG.10

LIGHT SOURCE SECTION — 2

Sm — 3

Sp — 11 (INTENSITY MODULATION SLM)

Sp' (PROJECTION PLANE)

DRIVE SECTION — 4

DRIVE SECTION — 13

CONTROL SECTION — 12

PHASE DISTRIBUTION CALCULATION SECTION — 5b

INTENSITY DISTRIBUTION CALCULATION SECTION — 12a

TARGET INTENSITY DISTRIBUTION CALCULATION SECTION — 5a

I

TARGET IMAGE

10 (PROJECTOR APPARATUS)

# F I G . 1 1

Sp' (PROJECTION PLANE)

11 (INTENSITY MODULATION SLM)

Sp

Sm

2

LIGHT SOURCE
SECTION

3

IMAGING
SECTION

6

4

DRIVE
SECTION

13

DRIVE
SECTION

12A

CONTROL SECTION

5bA

PHASE DISTRIBUTION
CALCULATION
SECTION

INTENSITY
DISTRIBUTION
CALCULATION SECTION

I

12a

TARGET INTENSITY
DISTRIBUTION
CALCULATION SECTION

5a

TARGET IMAGE

10A (PROJECTOR APPARATUS)

## INTERNATIONAL SEARCH REPORT

| | International application No. |
|---|---|
| | PCT/JP2021/015196 |

### A. CLASSIFICATION OF SUBJECT MATTER

Int.Cl. G02F1/01(2006.01)i, G02B26/06(2006.01)i, G02F1/13(2006.01)i,
G02F1/133(2006.01)i, G02F1/13357(2006.01)i, G02F1/1347(2006.01)i,
G03B21/00(2006.01)i
FI: G02F1/01D, G02B26/06, G02F1/13505, G02F1/133505, G02F1/13357, G02F1/1347,
G03B21/00D

According to International Patent Classification (IPC) or to both national classification and IPC

### B. FIELDS SEARCHED

Minimum documentation searched (classification system followed by classification symbols)

Int.Cl. G02F1/01, G02B26/06, G02F1/13, G02F1/133, G02F1/13357, G02F1/1347,
G03B21/00

Documentation searched other than minimum documentation to the extent that such documents are included in the fields searched

    Published examined utility model applications of Japan      1922-1996
    Published unexamined utility model applications of Japan    1971-2021
    Registered utility model specifications of Japan            1996-2021
    Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-532583 A (MTT INNOVATION INC.) 02 November 2017 (2017-11-02), entire text, all drawings | 1-10 |
| A | CN 103325129 A (WUXI OPTONTECH LTD.) 25 September 2013 (2013-09-25), entire text, all drawings | 1-10 |
| A | JP 2005-292662 A (HAMAMATSU PHOTONICS KK) 20 October 2005 (2005-10-20), entire text, all drawings | 1-10 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 June 2021 | 22 June 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/015196 |

```
JP 2017-532583 A   02 November 2017    US 2017/0127025 A1
                                       entire text, all drawings
                                       US 2018/0176519 A1
                                       US 2019/0369467 A1
                                       WO 2016/015163 A1
                                       EP 3175282 A1
                                       CN 106796355 A

CN 103325129 A     25 September 2013   (Family: none)

JP 2005-292662 A   20 October 2005     (Family: none)
```

Form PCT/ISA/210 (patent family annex) (January 2015)

**REFERENCES CITED IN THE DESCRIPTION**

**Patent documents cited in the description**

- WO 2017520022 A